(19) **Europäisches Patentamt**

**European Patent Office**

**Office européen des brevets**

(11) Veröffentlichungsnummer: **0 327 729 B1**

(12) **EUROPÄISCHE PATENTSCHRIFT**

(45) Veröffentlichungstag der Patentschrift: **04.03.92**

(21) Anmeldenummer: **88121751.7**

(22) Anmeldetag: **28.12.88**

(51) Int. Cl.⁵: **B60G 3/20**, B60G 21/04

(54) **Radaufhängung für eine angetriebene Vorderachse eines Kraftfahrzeugs.**

(30) Priorität: **09.02.88 DE 3803802**

(43) Veröffentlichungstag der Anmeldung:
**16.08.89 Patentblatt 89/33**

(45) Bekanntmachung des Hinweises auf die
Patenterteilung:
**04.03.92 Patentblatt 92/10**

(84) Benannte Vertragsstaaten:
**ES FR GB IT SE**

(56) Entgegenhaltungen:
**DE-A- 976 856**
**GB-A- 2 089 742**
**US-A- 4 153 272**
**US-A- 4 529 223**

**REVUE TECHNIOUE AUTOMOBILE, Band 29,
Nr. 340, Januar 1975, Seite 58; "Dépose et
repose de la barre stabilisatrice arrière"**

(73) Patentinhaber: **Dr.Ing.h.c. F. Porsche Aktiengesellschaft**
**Porschestrasse 42**
**W-7000 Stuttgart 40(DE)**

(72) Erfinder: **Armbrust, Eberhard, Dipl.-Ing.**
**Kronenstrasse 5**
**W-7253 Renningen(DE)**
Erfinder: **Wöhler, Hans-Jürgen, Dipl.-Ing.**
**Patronatstrasse 6**
**W-7254 Hemmingen(DE)**

## Beschreibung

Die Erfindung bezieht sich auf eine Radaufhängung für eine angetriebene Vorderachse eines Kraftfahrzeugs nach dem Oberbegriff des Anspruchs 1.

Aus der US-A-41 53 272 ist eine Radaufhängung mit einem Stabilisator für eine nicht angetriebene Vorderachse bekannt, dessen gerade ausgeführtes Gehänge am Radträger im Abstand zur Spreizachse des Rades angelenkt ist.

Dies bildet den Oberbegriff des Anspruchs 1.

Aufgabe der Erfindung ist es, eine Radaufhängung für eine angetriebene Vorderachse eines Kraftfahrzeugs mit einem Stabilisator zu schaffen, der unbeeinflußt von Schwenkbewegungen des Rades z.B. beim Lenken ist und einen unbehinderten Verlauf der Rad- Antriebswelle gewährleistet.

Diese Aufgabe wird erfindungsgemäß durch die kennzeichnenden Merkmale des Anspruchs 1 gelöst. Weitere Vorteilhafte Merkmale beinhalten die Unteransprüche.

Die mit der Erfindung hauptsächlich erzielten Vorteile bestehen, darin daß trotz einer Lage der beiden Gelenke des Gehänges in einer Ebene die durch die Antriebswelle führt, diese unbehindert vom Gehänge querverlaufend zum Rad anzuordnen ist. Diese Möglichkeit wird durch ein Gehänge geschaffen, das aus einem Arm besteht, der halbbogenförmig nach Art einer Sichel um die Antriebswelle herumgeführt ist. Somit kann ein erster oberer Anlenkpunkt des Armes am Radträger in der Spreizachse des Rades liegen, die durch ein oberes Federbeinstützlager und ein unteres Lenkerlager gebildet wird.

Der zweite untere Anlenkpunkt des Armes liegt - in bezug auf die Fahrtrichtung - hinter der Spreizachse und mit größtmöglichem Abstand zum oberen Gelenk, so daß sich ein Gehänge (Arm) größtmöglicher Länge ergibt.

Ein Ausführungsbeispiel der Erfindung ist in der Zeichnung dargestellt und wird im folgenden näher beschrieben.

Es zeigen:

Fig. 1   eine Seitenansicht eines Fahrzeugrades mit Stabilisator Federbein und Radführungslenker,

Fig. 2   eine Ansicht in Pfeilrichtung Z der Fig. 1 gesehen.

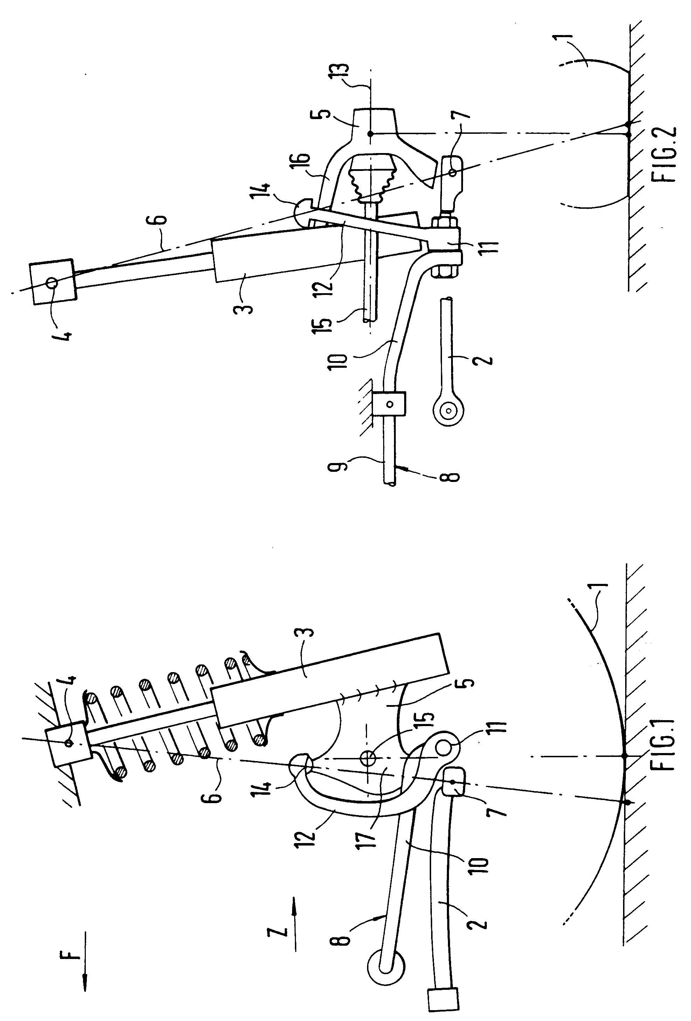

In Fig. 1 ist ein angetriebenes Vorderrad 1 eines Kraftfahrzeugs dargestellt, das über einen unteren Lenker 2 und ein Federbein 3 geführt wird. Dieses ist über ein oberes Stützlager 4 aufbauseitig gelagert und mit dem Radträger 5 verbunden. Eine Verbindungslinie 6 zwischen dem oberen Stützlager 4 und einem radträgerseitigen unteren Lenkerlager 7 bildet eine Spreizachse für das Rad, um das es eine Schwenkbewegung beim Lenken ausführt.

Zwischen den Vorderrädern 1 des Fahrzeugs ist ein Stabilisator aufbauseitig abgestützt gehalten. Dieser umfaßt einen Stab 9 mit abgekröpften Enden 10 die endseitig über untere Gelenke 11 mit Gehänge 12 verbunden sind. Diese sind in weiteren oberhalb der Raddrehachse 13 angeordneten Gelenken 14 am Radträger 5 gelagert.

Das Gehänge umfaßt einen halbkreisförmig, nach Art einer Sichel, gebogenen Arm 12, der sich in Fahrzeuglängsrichtung erstreckt (Fig. 1) und um die Antriebswelle 15 mit Abstand, welcher einen Freiraum 17 bildet, herumgeführt ist, derart, daß das obere Gelenk 14 in der Spreizachse 6 des Rades 1 liegt und das weitere untere Gelenk 11 - in bezug auf die Fahrtrichtung F - hinter der Antriebswelle 15 bzw. hinter der Spreizachse 6 liegt.

Das obere Gelenk 14 des Armes 12 ist in einer vorkragenden Konsole 16 des Radträgers 5 angeordnet und besteht vorzugsweise aus einem stehenden Kugelgelenk. Dagegen wird das untenliegende Gelenk 11 aus einem Gummi-Metall-Gelenk gebildet, das endseitig des abgekröpften Teils 10 des Stabes 9 gehalten ist.

## Patentansprüche

1.   Radaufhängung für eine Vorderachse eines Kraftfahrzeugs; mit einem aufbauseitig gehaltenen Stabilisator (8), der über ein Gelenk (11) mit einem Gehänge (12), der über ein weiteres Gelenk (14) mit einem Radträger (5) verbunden ist; und mit einer durch ein oberes Federbeinstützlager (4) und ein unteres Querlenkerlager (7) gebildeten Spreizachse (6), dadurch gekennzeichnet, daß die Vorderachse angetrieben ist, und daß das Gehänge aus einem halbkreisförmig ausgebildeten Arm (12) besteht, der in Fahrzeuglängsrichtung ausgerichtet ist und dessen eines radträgerseitige Gelenk (14) oberhalb einer Raddrehachse (13) in der Spreizachse (6) angeordnet ist.

2.   Radaufhängung nach Anspruch 1, dadurch gekennzeichnet, daß der Arm (12) zwischen den beiden Gelenken (11 und 14) einen halbkreisförmigen Freiraum (17) für eine querverlaufend angeordnete Rad- Antriebswelle (15) bildet, die in Hoch- und Längsrichtung beabstandet zum Arm (12) verläuft.

3.   Radaufhängung nach den Ansprüchen 1 oder 2, dadurch gekennzeichnet, daß das untere Gelenk (11) des Armes (12) - in bezug auf die Fahrtrichtung F - hinter dem Querlenker (2) und in seiner Ruhestellung annähernd in Höhe des Querlenkers (2) liegt, wobei das Gelenk (11) im gesamten Federungsbereich mit wechselndem Abstand zum QuerLenker (2) steht.

4. Radaufhängung nach den Ansprüchen 1, 2 oder 3, dadurch gekennzeichnet, daß das Gelenk (14) zwischen dem Arm (12) und dem Radträger (5) aus einem stehenden Kugelgelenk besteht, daß in einer nach innen vorragenden Konsole (16) des Radträgers (5) gehalten ist.

5. Radaufhängung nach einem oder mehreren der vorhergehenden Ansprüche, dadurch gekennzeichnet, daß das Gelenk (11) zwischen dem Arm (12) und dem querverlaufenden Stab (9) des Stabilisators (8) aus einem Gummi-Metall-Gelenk besteht, das endseitig eines abgewinkelten Endteils (10) des Stabes (9) gehalten ist und - in bezug auf die Fahrtrichtung F - hinter der Radantriebswelle (15) angeordnet ist.

## Claims

1. A wheel suspension for a front axle of a motor vehicle; having a stabilizer (8) held on the body and [connected] by way of a joint (11) to a suspension attachment (12), the stabilizer (8) being connected by way of a further joint (14) to a wheel support (5); and having an expanding axis (6) formed by an upper telescopic-leg support bearing (4) and a lower wishbone bearing (7), characterized in that the front axle is driven, and the suspension attachment comprises an arm (12) which is constructed in the form of a semicircle and which is orientated in the longitudinal direction of the vehicle and of which one joint (14) on the side of the wheel support is arranged above a wheel pivot axis (13) on the expanding axis (6).

2. A wheel suspension according to Claim 1, characterized in that the arm (12) between the two joints (11 and 14) forms a semicircular free space (17) for a tranversely arranged wheel drive shaft (15) extending vertically and longitudinally at a distance from the arm (12).

3. A wheel suspension according to Claim 1 or 2, characterized in that the lower joint (11) of the arm (12) is situated behind the wishbone (2) with respect to the direction of travel F and in its rest position substantially at the level of the wishbone (2), the joint (11) being at a varying distance from the wishbone (2) in the entire suspension range.

4. A wheel suspension according to Claim 1, 2 or 3, characterized in that the joint (14) between the arm (12) and the wheel support (5) comprises a stationary ball-and-socket joint held in an inwardly projecting bracket (16) of the wheel support (5).

5. A wheel suspension according to one or more of the preceding Claims, characterized in that the joint (11) between the arm (12) and the transversely extending rod (9) of the stabilizer (8) comprises a rubber-metal joint held at one end of an angled end part (10) of the rod (9) and arranged behind the wheel drive shaft (15) with respect to the direction of travel F.

## Revendications

1. Suspension de roue pour un essieu avant d'un véhicule automobile comportant un stabilisateur (9) maintenu sur la carrosserie, relié, par l'intermédiaire d'une articulation (11), à un appareil de suspension (12), relié à un support de roue (5), par l'intermédiaire d'une articulation supplémentaire (14) et comportant un axe d'écartement (6), formée par un palier d'appui supérieur (4) de jambe de force à ressort et un palier inférieur (7) d'articulation transversale, caractérisée en ce que l'essieu avant est un essieu moteur et que l'appareil de suspension est composé d'un bras (12) en forme de demi-cercle, orienté en direction longitudinale du véhicule, et dont l'une (14) des articulations est disposé au-dessus d'un axe de rotation de la roue (13), sur l'axe d'écartement (c).

2. Suspension de roue selon la revendication 1, caractérisée en ce que le bras (12) forme, entre les deux articulations (11 et 14) un espace libre (17) en forme de demi-cercle, pour un arbre d'entraînement de roue (15), disposé transversalement, qui s'étend à distance du bras (12), en hauteur et en longueur.

3. Suspension de roue selon la revendication 1 ou 2, caractérisée en ce que l'articulation inférieure (11) du bras (12) - par rapport à la direction de déplacement F - est située derrière la biellette de direction transversale (2) et, en position de repos, à peu près au niveau de cette dernière, l'articulation (11) étant à une distance variable de la biellette de direction transversale (2), dans la totalité la plage de débattement.

4. Suspension de roue selon les revendications 1, 2 ou 3, caractérisée en ce que l'articulation (14), située entre le bras (12) et le support de roue (5), se compose d'une articulation sphérique verticale, maintenue dans une console (16) du support de roue (5) qui fait saillie vers l'intérieur.

5. Suspension de roue sel on l'une ou plusieurs des revendications précédentes, caractérisée en ce que l'articulation (11), située entre le bras (12) et la barre transversale (9) du stabilisateur (8), est composée d'une articulation caoutchouc-métal, maintenue à une extrémité d'une partie d'extrémité (10) repliée de la barre (9) et - par rapport à la direction de déplacement F - disposée derrière l'arbre d'entraînement de roue (15).

FIG.2

FIG.1